# EUROPÄISCHE PATENTSCHRIFT

(11) **EP 3 529 112 B1**
(45) Veröffentlichungstag und Bekanntmachung des Hinweises auf die Patenterteilung: **21.05.2025**
(21) Anmeldenummer: 17793611.9
(22) Anmeldetag: 19.10.2017
(51) Int. Cl.: B60R 25/24, B60R 25/40

(54) **SCHLIESSSYSTEM, INSBESONDERE FÜR EIN KRAFTFAHRZEUG**
LOCKING SYSTEM, IN PARTICULAR FOR A MOTOR VEHICLE
DISPOSITIF DE FERMETURE, EN PARTICULIER POUR UN VÉHICULE AUTOMOBILE

(30) Priorität: 21.10.2016 DE 102016012559
(43) Veröffentlichungstag der Anmeldung: 28.08.2019
(73) Patentinhaber: Marquardt GmbH, 78604 Rietheim-Weilheim (DE)
(72) Erfinder: BECHER, Andreas, 78052 Villingen-Schwenningen (DE)
(74) Vertreter: Staeger & Sperling Partnerschaftsgesellschaft mbB
(86) Internationale Anmeldenummer: PCT/EP2017/076670
(87) Internationale Veröffentlichungsnummer: WO 2018/073329

(56) Entgegenhaltungen:
- EP-A1- 1 867 535
- WO-A1-2012/062468
- DE-A1- 102005 031 018
- DE-A1- 102016 002 302
- DE-A1- 4 340 260

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschlosssysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, der Heckklappe, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Sender und/oder Empfänger für die Übertragung von elektromagnetischen Signalen, Im bestimmungsgemäßen Betrieb ist zwischen dem Schlüssel und der Steuereinrichtung wenigstens ein Signal als codiertes Betriebssignal zur Authentifikation des Schlüssels übertragbar, so dass nach Authentifikation durch positive Auswertung des übertragenen Betriebssignals und damit bei berechtigtem Schlüssel eine Änderung des Zustandes der Steuereinrichtung bewirkbar ist.

Die DE 10 2016 002302 offenbart ein Schließsystem, für die Zugangs- und/oder Fahrberechtigung bei einem Kraftfahrzeug, in der Art einer Keyless Entry/Go-Funktionalität, mit einer wenigstens zwei Zustande besitzenden, als Steuereinrichtung ausgebildeten ersten Einrichtung, wie einer Steuereinrichtung zur Ent- und/oder Verriegelung der Autotüren in der Art eines elektronischen Schlüssels ausgebildeten zweiten Einrichtung, wobei die beiden Einrichtungen zu deren bestimmungsgemäßen Betrieb Sender und/oder Empfänger für elektromagnetische Signale besitzen, wobei es sich bei einem der zwischen der zweiten Einrichtung und der ersten Einrichtung übertragenen Signale um ein codiertes Betriebssignal zur Authentifikation der zweiten Einrichtung handelt, so dass nach Authentifikation durch positive Auswertung des übertragenen Betriebssignals bei berechtigter zweiter Einrichtung eine Änderung des Zustandes der ersten Einrichtung bewirkbar ist, und mit einem Energiespeicher zur Energieversorgung der zweiten Einrichtung für deren bestimmungsgemäßen Betrieb, wobei in der zweiten Einrichtung ein passiv arbeitender Transponder vorgesehen ist, wobei der Transponder ohne Energieversorgung durch die zweite Einrichtung betreibbar ist.

Solche Schließsysteme sind auch mit sogenannten "Keyless(schlüssellos)"-Funktionalitäten weiterentwickelt. So ist bei der "KeylessEntry"-Funktionalität eine manuelle Betätigung des elektronischen Schlüssels durch den Benutzer nicht mehr notwendig. Es genügt, dass der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "KeylessGo"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/StopTaste im Armaturenbrett betätigt.

Im Schlüssel befindet sich eine Schlüsselbatterie, die im allgemeinen nicht aufladbar ist, als ein Energiespeicher zur Energieversorgung der zweiten Einrichtung für deren bestimmungsgemäßen Betrieb, Im Falle einer erschöpften Schlüsselbatterie, ist das Schließsystem nicht funktionsfähig, so dass ein Zugang in das Kraftfahrzeug nicht mehr möglich ist. Für diesen Notfall ist bisher in einer Autotüre ein mechanisches Schloss integriert, welches mittels eines mechanischen Notschlüssels einen Zugang zum Kraftfahrzeug gestattet. Allerdings sind das mechanische Schloss sowie der mechanische Notschlüssel kostenaufwändig und bieten lediglich eine geringe Diebstahlsicherheit.

Der Erfindung liegt die Aufgabe zugrunde, das Schließsystem derart weiterzubilden, dass auf das mechanische Schloss sowie den mechanischen Notschlüssel verzichtet werden kann.

Diese Aufgabe wird bei einem gattungsgemäßen Schließsystem durch die kennzeichnenden Merkmale des Anspruchs 1 gelöst.

Beim erfindungsgemäßen Schließsystem ist in der zweiten Einrichtung ein passiv arbeitender Transponder vorgesehen. Der Transponder ist ohne Energieversorgung durch die zweite Einrichtung betreibbar, derart dass bei erschöpftem Energiespeicher ein Notbetrieb der zweiten Einrichtung unter Übertragung eines codierten Zusatzsignals zwischen der ersten Einrichtung und der zweiten Einrichtung für die Authentifikation der zweiten Einrichtung ermöglicht ist. Im Falle einer leeren Schlüsselbatterie ist somit die Übertragung des codierten Betriebssignals nicht erforderlich, vielmehr genügt die Übertragung des codierten Zusatzsignals zur Authentifikation, so dass der Zugang zum Kraftfahrzeug ermöglicht ist. Vorteilhafterweise ist also ein Notzugang zum Kraftfahrzeug ermöglicht, ohne dass es eines mechanischen Schlosses sowie eines mechanischen Notschlüssels bedarf. Weitere Ausgestaltungen der Erfindung sind Gegenstand der Unteransprüche.

In kostengünstiger Art kann es sich bei dem Transponder um einen passiven RFID(Radio Frequency Identification)-Transponder handeln. Der Transponder kann mit einer RFID-Frequenz im LF(Low Frequency)-Bereich, also im Kilo-Hertz-Bereich mit beispielsweise 20, 120 oder 125 kHz arbeiten. Der Transponder kann auch mit einer RFID-Frequenz im Mega-Hertz mit beispielsweise 315, 433 oder 868 MHz arbeiten. Bevorzugterweise kann der Transponder jedoch mit einer RFID-Frequenz im Giga-Hertz-Bereich arbeiten. Es kann sich dann anbieten, dass die Frequenz für die Trägerwelle für das Zusatzsignal zur Authentifikation zwischen dem Transponder sowie der ersten Einrichtung im Mikrowellen-Bereich, insbesondere zwischen ca. 1 bis 300 GHz, liegt.

In einer weiteren, einfachen Ausgestaltung des Schließsystems kann das Zusatzsignal ein von der ersten Einrichtung zum Transponder gesendetes Abfragesignal sowie ein vom Transponder zur ersten Einrichtung zurückgesendetes Antwortsignal umfassen. Das Antwortsignal enthält dann in einfacher Art und Weise die Information zur Authentifikation der zweiten Einrichtung. Zur Auslösung des Abfragesignals für den Notbetrieb kann zweckmäßigerweise ein Betätigungselement vorgesehen sein, das insbesondere vom Benutzer manuell betätigbar ist. Stellt der Benutzer fest, dass der Schlüssel aufgrund der erschöpften Schlüsselbatterie nicht mehr funktioniert, so betätigt der Benutzer dann das Betätigungselement, womit von der ersten Einrichtung das Abfragesignal zur Einleitung des Notbetriebs ausgesendet wird. Das Betätigungselement kann an geeigneter Stelle am Kraftfahrzeug angeordnet sein, beispielsweise an dem für den Benutzer gut zugänglichen Türgriff an einer Autotüre. Zwecks guter Ergonomie für den Benutzer kann es sich anbieten, dass das Betätigungselement aus einem berührungssensitiven Sensor besteht.

Bei dem Transponder handelt es sich um einen SAW(Surface-Acoustic-Wave)-Tag. Das von der ersten Einrichtung ausgesandte Abfragesignal wird vom SAW-Tag als codiertes Antwortsignal, das die Information zur Authentifikation der zweiten Einrichtung beinhaltet, zur ersten Einrichtung reflektiert. In vorteilhafter Weise kann der SAW-Tag ohne Energie betreibbar sein.

In funktionssicherer Art und Weise kann der SAW-Tag ein piezoelektrisches Substrat, beispielsweise einen Quarz, umfassen. Der SAW-Tag kann eine Tag-Antenne zum Empfang des Abfragesignals aufweisen. Die Tag-Antenne kann wiederum mit einem das elektromagnetische Signal des Abfragepulses in eine akustische Oberflächenwelle (surface acoustic wave SAW-Puls) umwandelnden Interdigitaltransducer (IDT) des SAW-Tags verbunden sein. Der SAW-Tag kann wenigstens einen an einer vorbestimmten Position des Substrats angeordneten Code-Reflektor für die akustische Oberflächenwelle aufweisen. Der an dem Code-Reflektor reflektierte Anteil des akustischen SAW-Pulses kann in einfacher Art und Weise am Interdigitaltransducer (IDT) in ein elektromagnetisches Signal zurückgewandelt sowie von der Tag-Antenne als Antwortsignal gesendet werden. Das entsprechend codiert reflektierte Antwortsignal kann dann von einem Reader, also einer in der Art eines Lesegerätes ausgebildeten Vorrichtung, in der ersten Einrichtung zur Ermittlung der Authentifikation der zweiten Einrichtung empfangen werden.

In einer funktionssicheren Ausgestaltung kann der Interdigitaltransducer (IDT) zwei metallische Elektroden umfassen. Die Elektrode kann eine fingerartige und/oder kammartige Struktur aufweisen. Der Code-Reflektor kann aus einem metallischen Streifen bestehen. Bei dem Metall kann es sich um Aluminium handeln, was besonders kostengünstig ist.

Bei dem codierten Betriebssignal für die Authentifikation der zweiten Einrichtung kann zur Steigerung der Diebstahlsicherheit ein wechselnder Code beziehungsweise Schlüssel Verwendung finden, womit die Diebstahlsicherheit im Hinblick auf das Abhören des Betriebssignals gesteigert ist. Das codierte Zusatzsignal enthält hingegen einen durch die Anordnung der Code-Reflektoren auf dem Substrat bestimmten, festen Code beziehungsweise Schlüssel. Um einem Diebstahlversuch durch Auslösung des Notbetriebs und/oder Abhören des festen Codes des Zusatzsignals durch den Dieb vorzubeugen, kann in einer funktionell erweiterten Ausgestaltung ein Schaltelement am Code-Reflektor des SAW-Tags angeschlossen sein. Je nach Schaltzustand des Schaltelements ist der Code-Reflektor aktiviert, beispielsweise wenn das Schaltelement eingeschaltet ist, oder deaktiviert, beispielsweise wenn das Schaltelement ausgeschaltet ist. Bei deaktivierten Code-Reflektor ist dann die Reflektion des codierten Antwortsignals verhindert, während hingegen bei aktivierten Code-Reflektor die Reflektion des codierten Antwortsignals ermöglicht ist. Zweckmäßigerweise kann bei nicht erschöpftem Energiespeicher der Code-Reflektor vom Schaltelement deaktiviert und bei erschöpftem Energiespeicher der Code-Reflektor vom Schaltelement aktiviert werden. Zwecks Steigerung des Komforts für den Benutzer kann es sich anbieten, dass die Aktivierung und/oder Deaktivierung des Code-Reflektors automatisch erfolgt. Somit wird zur Erhöhung der Diebstahlsicherheit die Übertragung des codierten Zusatzsignals lediglich für den Notfall ermöglicht, während eine Simulierung des Notfalls durch einen Dieb wirksam verhindert ist.

Die Erfindung stellt weiterhin eine Vorrichtung mit einem ver- und/oder entriegelbaren Schließelement und mit einem elektronischen Schließsystem für das Schließelement bereit. Bei dem Schließelement kann es sich um eine Türe, wie um eine Haustüre für eine Immobilie, eine Klappe für ein Behältnis, eine Autotüre für ein Kraftfahrzeug o. dgl., handeln. Das Schließsystem umfasst eine wenigstens zwei Zustände besitzende, als Steuereinrichtung ausgebildete erste Einrichtung und eine zugehörige, in der Art eines elektronischen Schlüssels, eines ID-Gebers, einer Chipkarte o. dgl. ausgebildete zweite Einrichtung. Die beiden Einrichtungen besitzen zu deren bestimmungsgemäßen Betrieb Sender und/oder Empfänger für insbesondere elektromagnetische Signale. Insbesondere handelt es sich bei wenigstens einem der zwischen der zweiten Einrichtung und der ersten Einrichtung übertragenen Signale um ein codiertes Betriebssignal zur Authentifikation der zweiten Einrichtung. Somit ist nach Authentifikation durch positive Auswertung des übertragenen Betriebssignals bei berechtigter zweiter Einrichtung eine Änderung des Zustandes der ersten Einrichtung bewirkbar. Die zweite Einrichtung weist einen Energiespeicher zur Energieversorgung für deren bestimmungsgemäßen Betrieb auf. Weiter ist in der zweiten Einrichtung ein passiv arbeitender Transponder vorgesehen. Der Transponder ist ohne Energieversorgung durch die zweite Einrichtung betreibbar, derart dass bei erschöpftem Energiespeicher ein Notbetrieb der zweiten Einrichtung unter Übertragung eines codierten Zusatzsignals zwischen der ersten Einrichtung und der zweiten Einrichtung für die Authentifikation der zweiten Einrichtung ermöglicht ist.

Schließlich stellt die Erfindung ein Verfahren zum Betrieb eines Schließsystems bereit. Bei diesem Verfahren wird im Notbetrieb von der ersten Einrichtung ein Abfragesignal eines Zusatzsignals zur zweiten Einrichtung ausgesandt. Das ausgesendete Abfragesignal wird vom Transponder in der zweiten Einrichtung empfangen und codiert. In bevorzugter Weise besteht dabei der Transponder aus einem SAW(Surface-Acoustic-Wave)-Tag. Anschließend wird das codierte Signal als Antwortsignal des Zusatzsignals vom Transponder in der zweiten Einrichtung reflektiert. Das codiert reflektierte Antwortsignal wird von der ersten Einrichtung empfangen und zur Authentifikation der zweiten Einrichtung ausgewertet. Nach positiver Authentifikation wird dann die erste Einrichtung bestimmungsgemäß betrieben. Insbesondere wird dann im bestimmungsgemäßen Betrieb die Änderung des Zustandes der ersten Einrichtung ermöglicht. Des Weiteren kann die Reflektion des Antwortsignals bei nicht erschöpften Energiespeicher deaktiviert sowie bei erschöpften Energiespeicher aktiviert werden, und zwar insbesondere in komfortabler Weise automatisch aktiviert werden, wodurch die Diebstahlsicherheit weiter gesteigert wird.

Für eine Ausgestaltung des erfindungsgemäßen Schließsystems ist nachfolgendes festzustellen.

Bei immer mehr Fahrzeugen kommt ein elektronischer Fahrzeugschlüssel zum Einsatz, der über eine drahtlose Kommunikation seine Identität an die Fahrzeugentriegelungselektronik sendet. Dabei werden für die Kommunikation aus dem Schlüssel heraus aktive Übertragungstechniken verwendet, die über einen Energiespeicher, wie beispielsweise einer Batterie, versorgt werden. Fällt diese Energie und/oder dieser Energiespeicher aus, wird in herkömmlicher Weise für die Entriegelung ein mechanischer Notschlüssel benötigt. Anstelle eines mechanischen Notschlüssels ist erfindungsgemäß eine passive Übertragungstechnik zusätzlich im Fahrzeugschlüssel integriert, so dass auch bei "leerer" Batterie eine Kommunikation ermöglicht ist.

Fällt die Schlüsselbatterie aus, so kann der Nutzer durch ein geeignetes Betätigen im und/oder am Fahrzeug eine Zusatzkommunikation aktivieren. Bei dieser Zusatzkommunikation wird bei einer gesonderten Frequenz, beispielsweise von 2,45 GHz, ein Impuls ausgesendet, der von der im Schlüssel via SAW-TAG realisierten Zusatzkommunikation als individuelle Impulsfolge wieder zurückgesendet wird. Empfängt die im Fahrzeug verbaute Zusatzkommunikations-Einrichtung die gültige Impulsfolge, kann sie in der Entriegelungselektronik das Entriegeln veranlassen und die Tür lässt sich dann öffnen. Möchte man die Sicherheit dieser zusätzlichen Kommunikation erhöhen, so kann man über von der Schlüsselelektronik gesteuerte Schalter alle oder einen Teil der Reflektoren im SAW-TAG deaktivieren und somit ein ungewolltes Preisgeben der Impulsfolge verhindern. Bei leerer Schlüsselbatterie aktivieren die Schalter dann automatisch die Reflektoren, um die individuelle Impulsfolge für die fahrzeugseitige Zusatzkommunikation wieder sichtbar zu machen.

Geschaffen ist somit eine zusätzliche passive Kommunikation im Fahrzeugschlüssel bei leerer Schlüsselbatterie. Dadurch ist eine Notöffnung des Fahrzeugs mit Hilfe des Fahrzeugschlüssels ohne Einsatz eines mechanischen Schlüssels ermöglicht.

Die mit der Erfindung erzielten Vorteile bestehen insbesondere darin, dass die Notöffnung des Fahrzeugs bei leerer Schlüsselbatterie ermöglicht ist. Bei geeigneten Notöffnungsstrategien fahrzeugseitig ist optional die Notöffnung zudem auch bei leerer Fahrzeugbatterie möglich. In Konsequenz ist der Entfall des bisherigen mechanischen Notschlüssels, der beispielsweise bisher im Fahrzeugschlüssel integriert ist, möglich. Damit ist ein preisgünstiges Schließsystem, insbesondere mit Keyless-Funktionalität, bereitgestellt. Darüber hinaus ist bei einem solchen Schließsystem auch die Diebstahlsicherheit gesteigert.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein mit einem Schließsystem ausgestattetes Kraftfahrzeug,
- Fig. 2: ein schematisches Blockschaltbild des Schließsystems,
- Fig. 3: einen Detailausschnitt aus Fig. 2 für eine weitere Ausgestaltung des Schließsystems und
- Fig. 4: eine mit einem Schließsystem ausgestattete Immobilie.

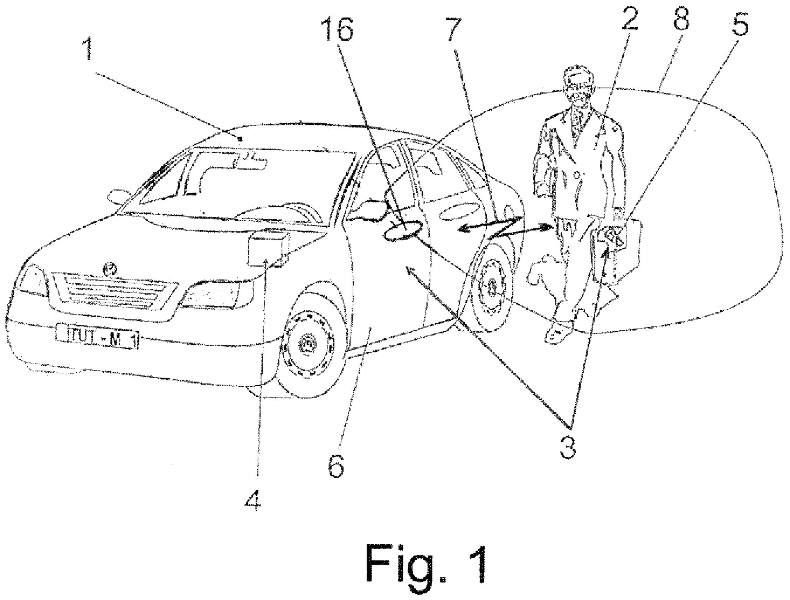

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfasst. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Sender und/oder Empfänger zum Senden und/oder Empfangen von Signalen 7 mittels einer elektromagnetischen Trägerwelle. Bei wenigstens einem dieser zwischen der zweiten Einrichtung 5 und der ersten Einrichtung 4 übertragenen Signale 7 handelt es sich um ein codiertes, elektromagnetisches Betriebssignal. Das codierte Betriebssignal 7 dient zur Authentifikation der zweiten Einrichtung 5, womit bei berechtigter zweiter Einrichtung 5 nach positiver Auswertung des übertragenen Betriebssignals 7 eine Änderung des Zustandes der ersten Einrichtung 4 bewirkbar ist. Die Übertragung des codierten Betriebssignals 7 erfolgt dann, wenn der berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des codierten Betriebssignals 7 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer 2 den Wirkbereich 8 verlassen hat. Selbstverständlich kann das Türschließsystem auch ein sonstiges, den Zugang zum Kraftfahrzeug 1 gestattendes Schließelement, beispielsweise eine Heckklappe o. dgl., umfassen.

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses (elektronisches Zündschloss) und/oder der Lenkradverriegelung (elektrische Lenkradverriegelung). Ebensogut kann ein sonstiges funktionsrelevantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 7 zur Authentifikation der zweiten Einrichtung 5 erfolgt dann, wenn der berechtigte Benutzer 2 sich im Kraftfahrzeug 1 befindet und einen Start/Stop-Schalter betätigt. Dadurch wird der Start-Vorgang o. dgl. des Kraftfahrzeugs 1 entsprechend der KeylessGo-Funktionalität ausgelöst.

Die Übertragung der Signale 7 für die KeylessEntry/Go-Funktionalität wird durch Betätigung eines Schalters und/oder eines Sensors vom Benutzer 2 ausgelöst. Für die Zugangsberechtigung kann es sich beispielsweise um die manuelle Betätigung des Türgriffs 16, des Heckgriffs o. dgl. handeln. Hierzu ist im Türgriff 16, Heckgriff o. dgl. des Kraftfahrzeugs 1 ein Schalter angeordnet. Wird ein beispielsweise kapazitiv arbeitender Näherungssensor verwendet, so kann vom Sensor die Annäherung der Hand des Benutzers 2 an den Türgriff 16 bzw. den Heck-griff detektiert werden. Für die Fahrberechtigung befindet sich der vom Benutzer 2 manuell betätigbare Start/Stop-Schalter im Kraftfahrzeug 1. Zweckmäßigerweise ist der Start/Stop-Schalter am Gangwahlhebel, am Zündschloss, im Armaturenbrett, in der Mittelkonsole o. dgl. im Kraftfahrzeug 1 angeordnet.

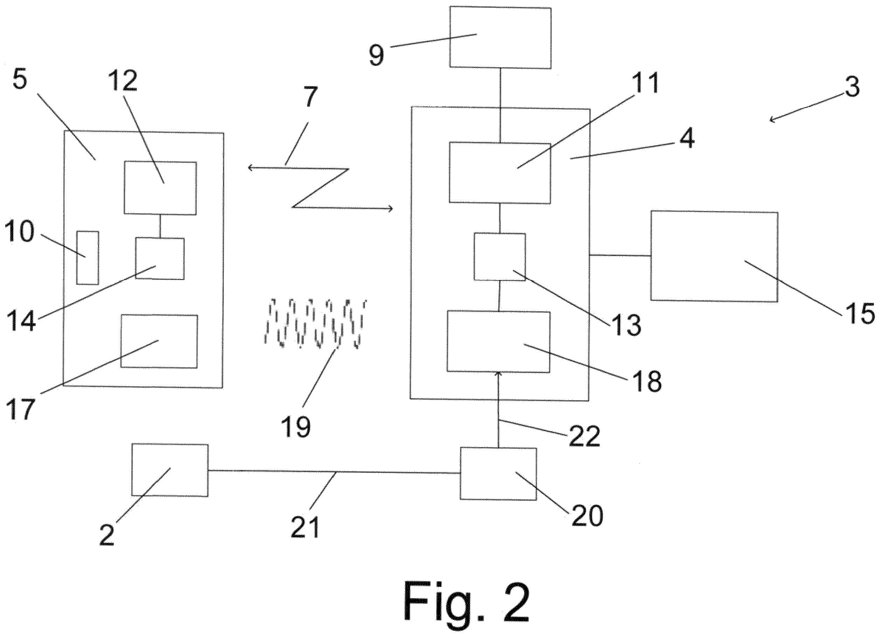

Anhand der Fig. 2 ist die nähere Ausgestaltung des Schließsystems 3 dargestellt. Wie man in Fig. 2 sieht, erfolgt die Kommunikation zwischen der ersten Einrichtung 4 und der zweiten Einrichtung 5 mittels der Signale 7, die zwischen der ersten Einrichtung 4 und der zweiten Einrichtung 5 übertragen werden. Zur Übertragung der Signale 7 besitzen die zweite Einrichtung 5 einen Sender und/oder Empfänger 12 und die erste Einrichtung 4 einen Sender und/oder Empfänger 11. Zur Erzeugung und/oder Auswertung des codierten Betriebssignals 7 ist in der ersten Einrichtung 4 sowie in der zweiten Einrichtung 5 jeweils eine Authentifizierungs- und/oder Codierungseinheit 13, 14 angeordnet. Mit der ersten Einrichtung 4 steht der Ver- und/oder Entriegelungsmechanismus 15 in Wirkverbindung, wobei der Ver- und/oder Entriegelungsmechanismus 15 nach positiver Authentifikation der zweiten Einrichtung 5 durch die Authentifizierungs- und Codierungseinheit 13 die Autotüre 6, die Heckklappe o. dgl. betätigt. Der Ver- und/oder Entriegelungsmechanismus 15 ist zweckmäßigerweise in einem Türschloss in der Autotüre 6 und/oder der Heckklappe angeordnet.

Wie man weiter anhand der Fig. 2 sieht, steht die erste Einrichtung 4 mit der aufladbaren Fahrzeugbatterie 9 als einem ersten Energiespeicher in elektrischer Verbindung. Der erste Energiespeicher 9 dient zur Energieversorgung der ersten Einrichtung 4 für deren bestimmungsgemäßen Betrieb. In der zweiten Einrichtung 5 befindet sich eine wechselbare Schlüsselbatterie 10 als ein zweiter Energiespeicher. Der zweite Energiespeicher 10 dient zur Energieversorgung der zweiten Einrichtung 5 für deren bestimmungsgemäßen Betrieb, Nach einer gewissen Betriebsdauer kann der zweite Energiespeicher 10 erschöpft sein. Wird dann der zweite Energiespeicher 10 nicht rechtzeitig ersetzt, so ist ein bestimmungsgemäßer Betrieb des Schließsystems 3 nicht mehr möglich. Die nähere Ausgestaltung des Schließsystems 3 für dessen Notbetrieb in einem solchen Fall ist nachfolgend näher erläutert.

In der zweiten Einrichtung 5 ist für die Notkommunikation ein passiv arbeitender Transponder 17 vorgesehen, wobei der Transponder 17 ohne Energieversorgung durch die zweite Einrichtung 5 betreibbar ist. Weiter ist in der ersten Einrichtung 4 ein Reader 18 für die Notkommunikation vorgesehen. Bei erschöpftem Energiespeicher 10 ist dann ein Notbetrieb der zweiten Einrichtung 5 unter Übertragung eines codierten Zusatzsignals 19, das beispielsweise einen festen, dem jeweiligen Kraftfahrzeug 1 zugeordneten Code umfasst, zwischen dem Reader 18 der ersten Einrichtung 4 und dem Transponder 17 der zweiten Einrichtung 5 zur Authentifikation der zweiten Einrichtung 5 ermöglicht. Die Notkommunikation für den Notbetrieb ist mittels eines am und/oder im Kraftfahrzeug angeordneten, berührungssensitiven Sensors 20 auslösbar, der hierzu bei Berührung 21 des Sensors 20 durch den Benutzer 2 ein Wecksignal 22 an den Reader 18 abgibt. Anstelle des berührungssensitiven Sensors 20 kann auch ein sonstiges, vom Benutzer 2 manuell betätigbares Betätigungselement, beispielsweise in der Art eines elektrischen Schalters, für die Auslösung der Notkommunikation Verwendung finden.

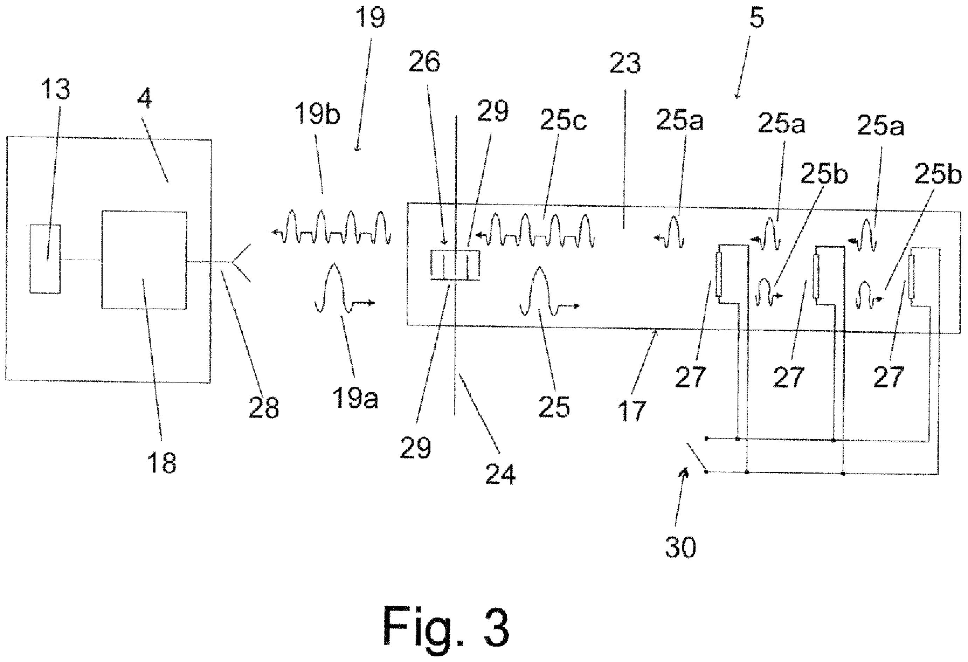

Bei dem Transponder 17 kann es sich um einen passiven RFID(Radio Frequency Identification)-Transponder handeln. Der Transponder 17 arbeitet beispielsweise mit einer RFID-Frequenz im Kilo-Hertz-Bereich. Selbstverständlich kann jedoch auch eine RFID-Frequenz im Mega-Hertz- oder Giga-Hertz-Bereich gewählt werden. Bevorzugterweise liegt die Frequenz für die Trägerwelle für das Zusatzsignal 19 zur Authentifikation zwischen dem Transponder 17 sowie der ersten Einrichtung 4 im Mikrowellen-Bereich. Insbesondere liegt die Frequenz zwischen ca. 1 bis 300 GHz. Weiter kann, wie in Fig. 3 zu sehen ist, das Zusatzsignal 19 ein von der ersten Einrichtung 4 zum Transponder 17 gesendetes Abfragesignal 19a sowie ein vom Transponder 17 zur ersten Einrichtung 4 zurückgesendetes codiertes Antwortsignal 19b mit einer Information zur Authentifikation der zweiten Einrichtung 5 umfassen.

In bevorzugter Ausgestaltung handelt es sich bei dem Transponder 17 um einen SAW(Surface-Acoustic-Wave)-Tag, wie in Fig. 3 näher zu sehen ist. In diesem Fall wird das von dem Reader 18 ausgesandte Abfragesignal 19a vom SAW-Tag 17 als codiertes Antwortsignal 19b, das die Information zur Authentifikation der zweiten Einrichtung 5 beinhaltet, zur ersten Einrichtung 4 reflektiert. Da das Antwortsignal 19b ausgehend vom Abfragesignal 19a lediglich reflektiert wird, kann der SAW-Tag 17 ohne Energie betreibbar ausgestaltet sein.

Der SAW-Tag 17 umfasst ein piezoelektrisches Substrat 23, beispielsweise einen Quarz. Weiterhin weist der SAW-Tag 17 eine Tag-Antenne 24 zum Empfang des Abfragesignals 19a auf. Die Tag-Antenne 24 ist mit einem das elektromagnetische Signal des Abfragepulses 19a in eine akustische Oberflächenwelle (surface acoustic wave - SAW-Puls) 25 umwandelnden Interdigitaltransducer (IDT) 26 des SAW-Tags 17 verbunden. Der SAW-Puls 25 bewegt sich dann über die Oberfläche des piezoelektrischen Substrats 23. Der SAW-Tag 17 weist wenigstens einen an einer vorbestimmten Position des Substrats 23 angeordneten Code-Reflektor 27 für die akustische Oberflächenwelle 25 auf. Am Code-Reflektor 27 wird dann ein Anteil 25a des SAW-Pulses 25 reflektiert sowie ein weiterer Anteil 25b des SAW-Pulses transmittiert. Der an dem Code-Reflektor 27 reflektierte akustische SAW-Puls 25a bzw. bei mehreren Code-Reflektoren 27 der aus den einzelnen reflektierten SAW-Pulsen 25a zusammengesetzte gesamte reflektierte SAW-Puls 25c wird am Interdigitaltransducer 26 in ein elektromagnetisches Signal zurückgewandelt sowie von der Tag-Antenne 24 als Antwortsignal 19b gesendet. Das Antwortsignal 19b ist entsprechend der Anordnung der Code-Reflektoren 27, wobei diese Anordnung zu der Information für die Authentifikation der zweiten Einrichtung 5 korrespondiert, codiert. Das entsprechend codiert reflektierte Antwortsignal 19b wird dann mittels der Antenne 28 vom Reader 18 in der ersten Einrichtung 4 empfangen und zur Ermittlung der Authentifikation der zweiten Einrichtung 5 in der Authentifizierungs- und Codierungseinheit 13 decodiert.

Wie weiter der Fig. 3 zu entnehmen ist, umfasst der Interdigitaltransducer 26 zwei metallische Elektroden 29, die auf dem Substrat 23 befindlich sind. Die Elektrode 29 weist eine fingerartige und/oder kammartige Struktur auf. Der Code-Reflektor 27 besteht aus einem auf dem Substrat 23 befindlichen, metallischen Streifen. Bei dem Metall handelt es sich beispielsweise um Aluminium. Weiter kann ein Schaltelement 30 am Code-Reflektor 27 des SAW-Tags 17 angeschlossen sein. Somit ist je nach Schaltzustand des Schaltelements 30 der Code-Reflektor 27 aktiviert, wenn das Schaltelement 30 offen ist, oder deaktiviert, wenn das Schaltelement 30 geschlossen ist. Im aktivierten Zustand reflektiert daher der Code-Reflektor 27 einen Teil 25a des SAW-Pulses 25 und transmittiert einen weiteren Teil 25b des SAW-Pulses 25. Im deaktivierten Zustand hingegen findet keine nennenswerte Reflektion statt, vielmehr transmittiert der Code-Reflektor 27 den SAW-Puls 25 weitgehend vollständig. Bei nicht erschöpftem Energiespeicher 10 in der zweiten Einrichtung 5 ist der Code-Reflektor 27 vom Schaltelement 30 deaktiviert, so dass die Reflektion des codierten Antwortsignals 19b verhindert ist, womit eine missbräuchliche Authentifikation mittels des Notbetriebs von einem Unbefugten verhindert ist. Lediglich bei erschöpftem Energiespeicher 10 in der zweiten Einrichtung 5 wird der Code-Reflektor 27 vom Schaltelement 30 automatisch aktiviert, so dass die Reflektion des codierten Antwortsignals 19b ermöglicht ist, womit dann der Notbetrieb ermöglicht ist. Soweit es gewünscht ist, einzelne Code-Reflektoren 27 zu aktivieren und/oder zu deaktivieren, sind mehrere, den jeweiligen Code-Reflektoren 27 zugeordnete Schaltelemente 30 vorgesehen.

Zusammenfassend ist somit festzustellen, dass das Schließsystem 3 wie folgt im Notbetrieb betrieben wird. Von der ersten Einrichtung 4 wird ein Abfragesignal 19a als Teil des Zusatzsignals 19 zur zweiten Einrichtung 5 ausgesandt. Das ausgesendete Abfragesignal 19a wird von dem, in bevorzugter Weise aus einem SAW(Surface-Acoustic-Wave)-Tag bestehenden, Transponder 17 in der zweiten Einrichtung 5 empfangen und codiert. Das codierte Signal wird als Antwortsignal 19b, wiederum als Teil des Zusatzsignals 19, vom Transponder 17 in der zweiten Einrichtung 5 reflektiert. Das codiert reflektierte Antwortsignal 19b wird von der ersten Einrichtung 4 empfangen und zur Authentifikation der zweiten Einrichtung 5 ausgewertet. Nach positiver Authentifikation wird die erste Einrichtung 4 bestimmungsgemäß betrieben. Im bestimmungsgemäßen Betrieb wird dann die jeweilige Änderung des Zustandes der ersten Einrichtung 4 ermöglicht. Zwecks Verhinderung eines Missbrauchs des Notbetriebs durch einen Unberechtigten kann die Reflektion des Antwortsignals 19b bei nicht erschöpften Energiespeicher 10 deaktiviert sowie bei erschöpften Energiespeicher 10, insbesondere automatisch, aktiviert werden.

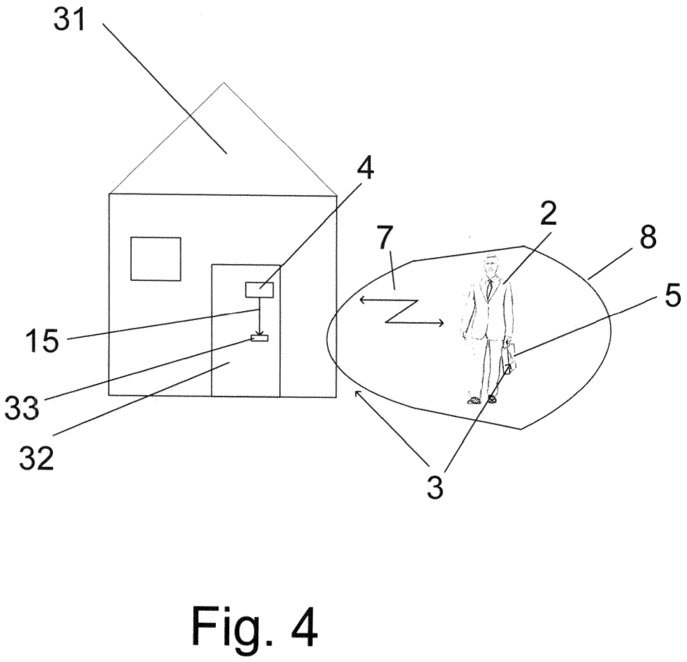

Ein weiteres Ausführungsbeispiel für eine erfindungsgemäße Vorrichtung mit einem ver- und/oder entriegelbaren Schließelement 32 ist in Fig. 4 zu sehen. Dort handelt es sich bei dem Schließelement 32 um die Haustüre an einer Immobilie 31. Die Haustüre 32 im Haus 31 ist mit einem Schließsystem 3 ausgestattet, das wiederum eine wenigstens zwei Zustände besitzende, als Steuereinrichtung ausgebildete erste Einrichtung 4 und eine im Besitz des berechtigten Benutzers 2 befindliche zugehörige, in der Art eines elektronischen Schlüssels, eines ID-Gebers, einer Chipkarte o. dgl. ausgebildete zweite Einrichtung 5 umfasst. Die beiden Einrichtungen 4, 5 besitzen gemäß Fig. 2 zu deren bestimmungsgemäßen Betrieb Sender und/oder Empfänger 11, 12 für elektromagnetische Signale 7. Bei wenigstens einem der zwischen der zweiten Einrichtung 5 und der ersten Einrichtung 4 übertragenen Signale 7 handelt es sich um ein codiertes Betriebssignal zur Authentifikation der zweiten Einrichtung 5, so dass nach Authentifikation durch positive Auswertung des übertragenen Betriebssignals 7 bei berechtigter zweiter Einrichtung 5 eine Änderung des Zustandes der ersten Einrichtung 4 bewirkbar ist. Aufgrund dieser Zustandsänderung der ersten Einrichtung 4 erfolgt eine Entriegelung des Ver- und/oder Entriegelungsmechanismus 15 im Türschloss 33 der Haustüre 32. Das Schließsystem 3 ist wiederum, wie oben anhand der Fig. 2 und Fig. 3 beschrieben, für den Notbetrieb bei erschöpftem Energiespeicher 10 in der zweiten Vorrichtung 5 ausgestaltet.

Die Erfindung ist nicht auf das beschriebene und dargestellte Ausführungsbeispiel beschränkt. Die Erfindung umfasst weiterhin auch alle fachmännischen Weiterbildungen im Rahmen der Patentansprüche. So kann ein derartiges Schließsystem nicht nur in einem Kraftfahrzeug oder in einem Haus eingesetzt werden. Es ist auch eine Verwendung für ein Türschloss an einer sonstigen Türe oder für ein Schloss an einem sonstigen Schließelement, beispielsweise an einer Klappe für ein Behältnis, oder zur Notentriegelung für sonstige verriegelbare Objekte möglich.

### Bezugszeichen-Liste:

- 1:: Kraftfahrzeug / Fahrzeug
- 2:: (berechtigter) Benutzer
- 3:: Schließsystem
- 4:: erste Einrichtung
- 5:: zweite Einrichtung / Schlüssel
- 6:: Autotüre
- 7:: Signal / Betriebssignal
- 8:: Wirkbereich
- 9:: erster Energiespeicher / Fahrzeugbatterie
- 10:: zweiter Energiespeicher / Schlüsselbatterie
- 11,12:: Sender und/oder Empfänger
- 13,14:: Authentifizierungs- und Codierungseinheit
- 15:: Ver- und/oder Entriegelungsmechanismus
- 16:: Türgriff / Fahrzeuggriff
- 17:: Transponder (in zweiter Einrichtung) / SAW-Tag
- 18:: Reader (in erster Einrichtung)
- 19:: Zusatzsignal
- 19a:: Abfragesignal
- 19b:: Antwortsignal
- 20:: Sensor (für die Notkommunikation)
- 21:: Berührung (von Sensor)
- 22:: Wecksignal
- 23:: Substrat
- 24:: Tag-Antenne
- 25:: SAW-Puls / Oberflächenwelle
- 25a:: (reflektierter) Anteil / Teil (von SAW-Puls)
- 25b:: (transmittierter) Anteil / Teil (von SAW-Puls)
- 25c:: (gesamter reflektierter) SAW-Puls
- 26:: Interdigitaltransducer
- 27:: Code-Reflektor
- 28:: Antenne (von Reader)
- 29:: Elektrode (von Interdigitaltransducer)
- 30:: Schaltelement
- 31:: Immobilie / Haus
- 32:: Schließelement / Haustüre
- 33:: Türschloss

## Patentansprüche

1. Schließsystem mit einer wenigstens zwei Zustände besitzenden, als Steuereinrichtung ausgebildeten ersten Einrichtung (4) und mit einer zugehörigen, in der Art eines elektronischen Schlüssels, eines ID-Gebers, einer Chip-Karte ausgebildeten zweiten Einrichtung (5), wobei die beiden Einrichtungen (4, 5) zu deren bestimmungsgemäßen Betrieb Sender und/oder Empfänger (11, 12) für elektromagnetische Signale (7) besitzen, wobei es sich bei wenigstens einem der zwischen der zweiten Einrichtung (5) und der ersten Einrichtung (4) übertragenen Signale (7) um ein codiertes Betriebssignal zur Authentifikation der zweiten Einrichtung (5) handelt, so dass nach Authentifikation durch positive Auswertung der übertragenen Betriebssignals (7) bei berechtigter zweiter Einrichtung (5) eine Änderung des Zustandes der ersten Einrichtung (4) bewirkbar ist, und mit einem Energiespeicher (10) zur Energieversorgung der zweiten Einrichtung (5) für deren bestimmungsgemäßen Betrieb, wobei in der zweiten Einrichtung (5) ein passiv arbeitender Transponder (17) ohne Energieversorgung durch die zweite Einrichtung (5) betreibbar ist, derart dass bei erschöpftem Energiespeicher (10) ein Notbetrieb der zweiten Einrichtung (5) unter Übertragung eines codierten Zusatzsignals (19) zwischen der ersten Einrichtung (4) und der zweiten Einrichtung (5) für die Authentifikation der zweiten Einrichtung (5) ermöglicht ist, wobei es sich bei dem Transponder (17) um einen SAW(Surface-Acoustic-Wave)-Tag handelt, wobei das von der ersten Einrichtung (4) ausgesandte Abfragesignal (19a) vom SAW-Tag (17) als codiertes Antwortsignal (19b), das die Information zur Authentifikation der zweiten Einrichtung (5) beinhaltet, zur ersten Einrichtung (4) reflektiert wird, und wobei der SAW-Tag (17) ohne Energie betreibbar ist, der SAW-Tag (17) ein piezoelektrisches Substrat (23) umfasst, **dadurch gekennzeichnet, dass** der SAW-Tag (17) eine Tag-Antenne (24) zum Empfang des Abfragesignals (19a) aufweist, dass weiter die Tag-Antenne (24) mit einem das elektromagnetische Signal des Abfragepulses (19a) in eine akustische Oberflächenwelle (25) umwandelnden Interdigitaltransducer (26) des SAW-Tags (17) verbunden ist, dass noch weiter der SAW-Tag (17) wenigstens einen an einer vorbestimmten Position des Substrats (23) angeordneten Code-Reflektor (27) für die akustische Oberflächenwelle (25) aufweist, dass nochmals weiter der an dem Code-Reflektor (27) reflektierte akustische SAW-Puls (25a) am Interdigitaltransducer (26) in ein elektromagnetisches Signal zurückgewandelt sowie von der Tag-Antenne (24) als Antwortsignal (19b) gesendet wird, und dass abermals weiter das entsprechend codiert reflektierte Antwortsignal (19b) von einem Reader (18) in der ersten Einrichtung (4) zur Ermittlung der Authentifikation der zweiten Einrichtung (5) empfangen wird und ein Schaltelement (30) am Code-Reflektor (27) des SAW-Tags (17) angeschlossen ist, wobei je nach Schaltzustand des Schaltelements (30) der Code-Reflektor (27) aktiviert oder deaktiviert ist, dass bei nicht erschöpftem Energiespeicher (10) der Code-Reflektor (27) vom Schaltelement (30) deaktiviert ist, derart, dass die Reflektion des codierten Antwortsignals (19b) verhindert ist, und dass weiter bei erschöpftem Energiespeicher (10) der Code-Reflektor (27) vom Schaltelement (30) aktiviert wird derart, dass die Reflektion des codierten Antwortsignals (19b) ermöglicht ist.

2. Schließsystem nach Anspruch 1, **dadurch gekennzeichnet, dass** es sich um ein Schließsystem für die Zugangs- und/oder Fahrberechtigung bei einem Kraftfahrzeug (1) in der Art einer KeylessEntry/Go-Funktionalität handelt.

3. Schließsystem nach Anspruch 1 oder 2, **dadurch gekennzeichnet, dass** es sich bei dem Transponder (17) um einen passiven RFID (Radio Frequency Identification)-Transponder handelt, und dass der Transponder (17) mit einer RFID-Frequenz im Kilo-Hertz- oder Mega-Hertz- oder Giga-Hertz-Bereich arbeitet.

4. Schließsystem nach einem der Ansprüche 1 bis 3, **dadurch gekennzeichnet, dass** die Frequenz für die Trägerwelle für das Zusatzsignal (19) zur Authentifikation zwischen dem Transponder (17) sowie der ersten Einrichtung (4) im Mikrowellen-Bereich liegt.

5. Schließsystem nach Anspruch 4, **dadurch gekennzeichnet, dass** die Frequenz für die Trägerwelle für das Zusatzsignal (19) zur Authentifikation zwischen dem Transponder (17) sowie der ersten Einrichtung (4) im Bereich zwischen ca. 1 bis 300 GHz, liegt

6. Schließsystem nach einem der Ansprüche 1-5, **dadurch gekennzeichnet, dass** das Zusatzsignal (19) ein von der ersten Einrichtung (4) zum Transponder (17) gesendetes Abfragesignal (19a) sowie ein vom Transponder (17) zur ersten Einrichtung (4) zurückgesendetes Antwortsignal (19b) mit einer Information zur Authentifikation der zweiten Einrichtung (5) umfasst, und dass ein Betätigungselement zur Auslösung des Abfragesignals (19b) für den Notbetrieb vorgesehen ist.

7. Schließsystem nach Anspruch 6, **dadurch gekennzeichnet, dass** als Betätigungselement ein berührungssensitiver Sensor, zur Auslösung des Abfragesignals (19b) für den Notbetrieb vorgesehen ist.

8. Schließsystem nach einem der Ansprüche 1 bis 7, **dadurch gekennzeichnet, dass** der Interdigitaltransducer (26) zwei metallische Elektroden (29) umfasst, wobei die Elektrode (29) eine fingerartige und/oder kammartige Struktur aufweist.

9. Schließsystem nach Anspruch 8, **dadurch gekennzeichnet, dass** der Code-Reflektor (27) aus einem metallischen Streifen besteht, und dass es sich vorzugsweise bei dem Metall um Aluminium handelt.

10. Vorrichtung mit einem ver- und/oder entriegelbaren Schließelement (32), mit einem Schließsystem (3) für das Schließelement (32), wobei das Schließsystem (3) eine wenigstens zwei Zustände besitzende, als Steuereinrichtung ausgebildete erste Einrichtung (4) und eine zugehörige, in der Art eines elektronischen Schlüssels, eines ID-Gebers, einer Chipkarte ausgebildete zweite Einrichtung (5) umfasst, wobei die beiden Einrichtung (4, 5) zu deren bestimmungsgemäßen Betrieb Sender und/oder Empfänger (11, 12) für elektromagnetische Signale (7) besitzen, wobei es sich bei wenigstens einem der zwischen der zweiten Einrichtung (5) und der ersten Einrichtung (4) übertragenen Signale (7) um ein codiertes Betriebssignal zur Authentifikation der zweiten Einrichtung (5) handelt, so dass nach Authentifikation durch positive Auswertung des übertragenen Betriebssignals (7) bei berechtigter zweiter Einrichtung (5) eine Änderung des Zustandes der ersten Einrichtung (4) bewirkbar ist, und mit einem Energiespeicher (10) zur Energieversorgung der zweiten Einrichtung (5) für deren bestimmungsgemäßen Betrieb, wobei in der zweiten Einrichtung (5) ein passiv arbeitender Transponder (17) vorgesehen ist, wobei der Transponder (17) ohne Energieversorgung durch die zweite Einrichtung (5) betreibbar ist, derart dass bei erschöpftem Energiespeicher (10) ein Notbetrieb der zweiten Einrichtung (5) unter Übertragung eines codierten Zusatzsignals (19) zwischen der ersten Einrichtung (4) und der zweiten Einrichtung (5) für die Authentifikation der zweiten Einrichtung (5) ermöglicht ist, wobei es sich bei dem Transponder (17) um einen SAW(Surface-Acoustic-Wave)-Tag handelt, wobei das von der ersten Einrichtung (4) ausgesandte Abfragesignal (19a) vom SAW-Tag (17) als codiertes Antwortsignal (19b), das die Information zur Authentifikation der zweiten Einrichtung (5) beinhaltet, zur ersten Einrichtung (4) reflektiert wird, und wobei der SAW-Tag (17) ohne Energie betreibbar ist, der SAW-Tag (17) ein piezoelektrisches Substrat (23) umfasst, **dadurch gekennzeichnet, dass** der SAW-Tag (17) eine Tag-Antenne (24) zum Empfang des Abfragesignals (19a) aufweist, dass weiter die Tag-Antenne (24) mit einem das elektromagnetische Signal des Abfragepulses (19a) in eine akustische Oberflächenwelle (25) umwandelnden Interdigitaltransducer (26) des SAW-Tags (17) verbunden ist, dass noch weiter der SAW-Tag (17) wenigstens einen an einer vorbestimmten Position des Substrats (23) angeordneten Code-Reflektor (27) für die akustische Oberflächenwelle (25) aufweist, dass nochmals weiter der an dem Code-Reflektor (27) reflektierte akustische SAW-Puls (25a) am Interdigitaltransducer (26) in ein elektromagnetisches Signal zurückgewandelt sowie von der Tag-Antenne (24) als Antwortsignal (19b) gesendet wird, und dass abermals weiter das entsprechend codiert reflektierte Antwortsignal (19b) von einem Reader (18) in der ersten Einrichtung (4) zur Ermittlung der Authentifikation der zweiten Einrichtung (5) empfangen wird und ein Schaltelement (30) am Code-Reflektor (27) des SAW-Tags (17) angeschlossen ist, wobei je nach Schaltzustand des Schaltelements (30) der Code-Reflektor (27) aktiviert oder deaktiviert ist, dass bei nicht erschöpftem Energiespeicher (10) der Code-Reflektor (27) vom Schaltelement (30) deaktiviert ist, derart, dass die Reflektion des codierten Antwortsignals (19b) verhindert ist, und dass weiter bei erschöpftem Energiespeicher (10) der Code-Reflektor (27) vom Schaltelement (30) aktiviert wird derart, dass die Reflektion des codierten Antwortsignals (19b) ermöglicht ist.

11. Vorrichtung mit einem ver- und/oder entriegelbaren Schließelement (32) nach Anspruch 10, **dadurch gekennzeichnet, dass** es sich um ein ver- und/oder entriegelbares Schließelement (32) einer Haustüre für eine Immobilie (31) handelt.

12. Verfahren zum Betrieb eines Schließsystems nach einem der Ansprüche 1 bis 9, **dadurch gekennzeichnet, dass** im Notbetrieb von der ersten Einrichtung (4) ein Abfragesignal (19a) eines Zusatzsignals (19) zur zweiten Einrichtung (5) ausgesandt wird, dass das ausgesendete Abfragesignal (19a) von dem, aus einem SAW(Surface-Acoustic-Wave)-Tag bestehenden, Transponder (17) in der zweiten Einrichtung (5) empfangen und codiert wird, dass das codierte Signal als Antwortsignal (19b) des Zusatzsignals (19) vom Transponder (17) in der zweiten Einrichtung (5) reflektiert wird, dass das codiert reflektierte Antwortsignal (19b) von der ersten Einrichtung (4) empfangen und zur Authentifikation der zweiten Einrichtung (5) ausgewertet wird, und dass nach positiver Authentifikation die erste Einrichtung (4) bestimmungsgemäß betrieben wird, so dass die Änderung des Zustandes der ersten Einrichtung (4) ermöglicht wird, und dass die Reflektion des Antwortsignals (19b) bei nicht erschöpftem Energiespeicher (10) deaktiviert sowie bei erschöpftem Energiespeicher (10) aktiviert wird.

13. Verfahren zum Betrieb eines Schließsystems nach Anspruch 12, **dadurch gekennzeichnet, dass** die Reflektion des Antwortsignals (19b) bei erschöpftem Energiespeicher (10) automatisch aktiviert wird

## Claims

1. A locking system having a first device (4) having at least two states and being configured as a control unit, and an associated second device (5) configured as an electronic key, an ID transponder, a chip card, the two devices (4, 5) having transmitters and/or receivers (11, 12) for electromagnetic signals (7) for the intended operation thereof, wherein at least one of the signals (7) transmitted between the second device (5) and the first device (4) is an encoded operation signal for authenticating the second device (5) such that, upon authentication by positively evaluating the transmitted operation signal (7), if the second device (5) is authorized, a change in state of the first device (4) is effectable, and an energy storage (10) for supplying energy to the second device (5) for the intended operation thereof, wherein in the second device (5), a passively operating transponder (17) is operable without any energy supply by the second device (5) such that, when the energy storage (10) is depleted, an emergency operation of the second device (5) is enabled by transmitting an encoded auxiliary signal (19) between the first device (4) and the second device (5) for authenticating the second device (5), wherein the transponder (17) is a surface acoustic wave (SAW) tag, wherein the request signal (19a) broadcast by the first device (4) is reflected by the SAW tag (17) to the first device (4) as an encoded response signal (19b) including the information for authenticating the second device (5), and wherein the SAW tag (17) is operable without any energy, the SAW tag (17) comprises a piezoelectric substrate (23), **characterized in that** the SAW tag (17) has a tag antenna (24) for receiving the request signal (19a), that the tag antenna (24) is further connected to an interdigital transducer (26) of the SAW tag (17) converting the electromagnetic signal of the request impulse (19a) to an acoustic surface wave (25), that the SAW tag (17) yet further has at least one code reflector (27) for the acoustic surface wave (25) disposed at a predetermined position of the substrate (23), that the acoustic SAW impulse (25a) reflected at the code reflector (27) is yet further reconverted to an electromagnetic signal at the interdigital transducer (26) and is sent as a response signal (19b) by the tag antenna (24), and that the reflected response signal (19b) correspondingly encoded is received by a reader (18) in the first device (4) for determining the authentication of the second device (5), and a switch element (30) is connected to the code reflector (27) of the SAW tag (17), wherein, depending on the switch state of the switch element (30), the code reflector (27) is activated or deactivated, that, when the energy storage (10) is not depleted, the code reflector (27) is deactivated by the switch element (30) such that reflecting the encoded response signal (19b) is prevented, and further, when the energy storage (10) is depleted, the code reflector (27) is activated by the switch element (30) such that reflecting the encoded response signal (19b) is enabled.

2. The locking system according to Claim 1, **characterized in that** it is a locking system for authorizing access to or driving a motor vehicle (1) in the form of a keyless entry/go functionality.

3. The locking system according to Claim 1 or 2, **characterized in that** the transponder (17) is a passive radio frequency identification (RFID) transponder, and that the transponder (17) operates with an RFID frequency in the kilohertz, megahertz, or gigahertz range.

4. The locking system according to any one of Claims 1 to 3, **characterized in that** the frequency for the carrier wave for the auxiliary signal (19) for authenticating between the transponder (17) and the first device (4) is in the microwave range.

5. The locking system according to Claim 4, **characterized in that** the frequency for the carrier wave for the auxiliary signal (19) for authenticating between the transponder (17) and the first device (4) is in the range of about 1 to 300 GHz.

6. Locking system according to any one of the Claims 1-5, **characterized in that** the auxiliary signal (19) is a request signal (19a) sent to the transponder (17) by the first device (4) and comprises a response signal (19b) sent back to the first device (4) by the transponder (17) having an information for authenticating the second device (5), and that an actuation element for triggering the request signal (19b) for the emergency operation is provided.

7. The locking system according to Claim 6, **characterized in that** a touch sensitive sensor is provided as an actuation element for triggering the request signal (19b) for the emergency operation.

8. The locking system according to any one of Claims 1 to 7, **characterized in that** the interdigital transducer (26) comprises two metallic electrodes (29), the electrode (29) having a finger-like and/or comb-like structure.

9. The locking system according to Claim 8, **characterized in that** the code reflector (27) is made of a metallic strip, and that the metal preferably is aluminium.

10. An apparatus having a lockable and/or unlockable locking element (32), having a locking system (3) for the locking element (32), wherein the locking system (3) comprises a first device (4) having at least two states and being configured as a control unit, and an associated second device (5) configured as an electronic key, an ID transponder, a chip card, the two devices (4, 5) having transmitters and/or receivers (11, 12) for electromagnetic signals (7) for the intended operation thereof, wherein at least one of the signals (7) transmitted between the second device (5) and the first device (4) is an encoded operation signal for authenticating the second device (5) such that, upon authentication by positively evaluating the transmitted operation signal (7), if the second device (5) is authorized, a change in state of the first device (4) is effectable, and an energy storage (10) for supplying energy to the second device (5) for the intended operation thereof, wherein in the second device (5), a passively operating transponder (17) is provided, wherein the transponder (17) is operable without any energy supply by the second device (5) such that, when the energy storage (10) is depleted, an emergency operation of the second device (5) is enabled by transmitting an encoded auxiliary signal (19) between the first device (4) and the second device (5) for authenticating the second device (5), wherein the transponder (17) is a surface acoustic wave (SAW) tag, wherein the request signal (19a) broadcast by the first device (4) is reflected by the SAW tag (17) to the first device (4) as an encoded response signal (19b) including the information for authenticating the second device (5), and wherein the SAW tag (17) is operable without any energy, the SAW tag (17) comprises a piezoelectric substrate (23), **characterized in that** the SAW tag (17) has a tag antenna (24) for receiving the request signal (19a), that the tag antenna (24) is further connected to an interdigital transducer (26) of the SAW tag (17) converting the electromagnetic signal of the request impulse (19a) to an acoustic surface wave (25), that the SAW tag (17) yet further has at least one code reflector (27) for the acoustic surface wave (25) disposed at a predetermined position of the substrate (23), that the acoustic SAW impulse (25a) reflected at the code reflector (27) is yet further reconverted to an electromagnetic signal at the interdigital transducer (26) and is sent as a response signal (19b) by the tag antenna (24), and that the reflected response signal (19b) correspondingly encoded is received by a reader (18) in the first device (4) for determining the authentication of the second device (5), and a switch element (30) is connected to the code reflector (27) of the SAW tag (17), wherein, depending on the switch state of the switch element (30), the code reflector (27) is activated or deactivated, that, when the energy storage (10) is not depleted, the code reflector (27) is deactivated by the switch element (30) such that reflecting the encoded response signal (19b) is prevented, and further, when the energy storage (10) is depleted, the code reflector (27) is activated by the switch element (30) such that reflecting the encoded response signal (19b) is enabled.

11. The apparatus having a lockable and/or unlockable locking element (32) according to Claim 10, **characterized in that** it is a lockable and/or unlockable locking element (32) of a front door for a property (31).

12. A method for operating a locking system according to any one of Claims 1 to 9, **characterized in that**, during emergency operation, a request signal (19a) of an auxiliary signal (19) is broadcast to the second device (5) by the first device (4), that the broadcast request signal (19a) is received and encoded by the transponder (17) composed of a surface acoustic wave (SAW) tag in the second device (5), that the encoded signal is reflected as a response signal (19b) of the auxiliary signal (19) by the transponder (17) in the second device (5), that the encoded reflected response signal (19b) is received and evaluated by the first device (4) for authenticating the second device (5), and that the first device (4), upon positive authentication, is operated as intended such that a change of state of the first device (4) is enabled, and that reflecting the response signal (19b) is deactivated when the energy storage (10) is not depleted, and is activated when the energy storage (10) is depleted.

13. The method for operating a locking system according to Claim 12, **characterized in that** reflecting the response signal (19b) is automatically activated when the energy storage (10) is depleted.

## Revendications

1. Système de fermeture, comprenant un premier équipement (4) présentant au moins deux états, réalisé sous forme d'équipement de commande, et un deuxième équipement associé (5) réalisé sous forme de clé électronique, de transmetteur d'ID ou de carte à puce, dans lequel les deux équipements (4, 5) disposent pour leur fonctionnement correct d'émetteurs et/ou de récepteurs (11, 12) pour des signaux électromagnétiques (7), dans lequel au moins l'un des signaux (7) transmis entre le deuxième équipement (5) et le premier équipement (4) est un signal de fonctionnement codé pour l'authentification du deuxième équipement (5), de sorte qu'après authentification par une évaluation positive du signal de fonctionnement transmis (7), si le deuxième équipement (5) est autorisé, un changement de l'état du premier équipement (4) peut être provoqué, et comprenant un accumulateur d'énergie (10) pour l'alimentation en énergie du deuxième équipement (5) en vue de son fonctionnement correct, dans lequel dans le deuxième équipement (5), un transpondeur (17) fonctionnant de manière passive peut être amené à fonctionner sans alimentation en énergie par le deuxième équipement (5) de telle sorte que si l'accumulateur d'énergie (10) est épuisé, un fonctionnement de secours du deuxième équipement (5) est rendu possible en transmettant un signal supplémentaire codé (19) entre le premier équipement (4) et le deuxième équipement (5) pour l'authentification du deuxième équipement (5), dans lequel le transpondeur (17) est une étiquette SAW (onde acoustique de surface), dans lequel le signal d'interrogation (19a) émis par le premier équipement (4) est réfléchi par l'étiquette SAW (17) vers le premier équipement (4) sous forme de signal de réponse codé (19b) qui contient l'information pour l'authentification du deuxième équipement (5), et dans lequel l'étiquette SAW (17) peut fonctionner sans énergie, l'étiquette SAW (17) comprenant un substrat piézoélectrique (23),
**caractérisé en ce que** l'étiquette SAW (17) présente une antenne d'étiquette (24) pour recevoir le signal d'interrogation (19a), **en ce qu'**en outre l'antenne d'étiquette (24) est reliée à un transducteur interdigité (26) de l'étiquette SAW (17), qui convertit le signal électromagnétique de l'impulsion d'interrogation (19a) en une onde de surface acoustique (25), **en ce qu'**en outre encore l'étiquette SAW (17) présente au moins un réflecteur de code (27) pour l'onde de surface acoustique, disposé dans une position prédéterminée du substrat (23), **en ce qu'**en outre encore l'impulsion SAW acoustique (25a), réfléchie au niveau du réflecteur de code (27), est reconverti au niveau du transducteur interdigité (26) en un signal électromagnétique et est envoyé par l'antenne d'étiquette (24) sous forme de signal de réponse (19b), et **en ce qu'**en outre encore le signal de réponse réfléchi (19b), codé de manière adéquate, est reçu par un lecteur (18) dans le premier équipement (4) pour déterminer l'authentification du deuxième équipement (5), et un élément de commutation (30) est connecté au réflecteur de code (27) de l'étiquette SAW (17), dans lequel le réflecteur de code (27) est activé ou désactivé selon l'état de commutation de l'élément de commutation (30), **en ce que**, si l'accumulateur d'énergie (10) n'est pas épuisé, le réflecteur de code (27) est désactivé par l'élément de commutation (30) de façon à empêcher la réflexion du signal de réponse codé (19b), et **en ce qu'**en outre, si l'accumulateur d'énergie (10) est épuisé, le réflecteur de code (27) est activé par l'élément de commutation (30) de façon à permettre la réflexion du signal de réponse code (19b).

2. Système de fermeture selon la revendication 1, **caractérisé en ce qu'**il s'agit d'un système de fermeture pour l'autorisation d'accès et/ou de conduite sur un véhicule automobile (1), à la manière d'une fonctionnalité d'entrée/ de démarrage sans clé.

3. Système de fermeture selon la revendication 1 ou 2, **caractérisé en ce que** le transpondeur (17) est un transpondeur RFID (identification par radiofréquence) passif, et **en ce que** le transpondeur (17) fonctionne sur une fréquence RFID dans la plage des kilohertz ou des mégahertz ou des gigahertz.

4. Système de fermeture selon l'une quelconque des revendications 1 à 3, **caractérisé en ce que** la fréquence pour l'onde porteuse pour le signal supplémentaire (19) servant à l'authentification entre le transpondeur (17) et le premier équipement (4) est comprise dans la plage des microondes.

5. Système de fermeture selon la revendication 4, **caractérisé en ce que** la fréquence pour l'onde porteuse pour le signal supplémentaire (19) destinée à l'authentification entre le transpondeur (17) et le premier équipement (4) est comprise dans la plage entre environ 1 à 300 GHz.

6. Système de fermeture selon l'une quelconque des revendications 1 à 5, **caractérisé en ce que** le signal supplémentaire (19) comprend un signal d'interrogation (19a) envoyé du premier équipement (4) au transpondeur (17) ainsi qu'un signal de réponse (19b) renvoyé du transpondeur (17) au premier équipement (4) avec une information pour l'authentification du deuxième équipement 5), et **en ce qu'**un élément d'actionnement est prévu pour déclencher le signal d'interrogation (19b) pour le fonctionnement de secours.

7. Système de fermeture selon la revendication 6, **caractérisé en ce qu'**un capteur tactile est prévu en tant qu'élément d'actionnement pour déclencher le signal d'interrogation (19b) pour le fonctionnement de secours.

8. Système de fermeture selon l'une quelconque des revendications 1 à 7, **caractérisé en ce que** le transducteur interdigité (26) comprend deux électrodes métalliques (20), l'électrode (29) présentant une structure de type doigt et/ou peigne.

9. Système de fermeture selon la revendication 8, **caractérisé en ce que** le réflecteur de code (27) est composé d'une bande métallique, et **en ce que** le métal est de préférence de l'aluminium.

10. Dispositif pourvu d'un élément de fermeture verrouillable et/ou déverrouillable (32), comprenant un système de fermeture (3) pour l'élément de fermeture (32), dans lequel le système de fermeture (3) comprend un premier équipement (4) présentant au moins deux états, réalisé sous forme d'équipement de commande, et un deuxième équipement associé (5) réalisé sous forme de clé électronique, de transmetteur d'ID ou de carte à puce, dans lequel les deux équipements (4, 5) disposent pour leur fonctionnement correct d'émetteurs et/ou de récepteurs (11, 12) pour des signaux électromagnétiques (7), dans lequel au moins l'un des signaux (7) transmis entre le deuxième équipement (5) et le premier équipement (4) est un signal de fonctionnement codé pour l'authentification du deuxième équipement (5), de sorte qu'après authentification par une évaluation positive du signal de fonctionnement transmis (7), si le deuxième équipement (5) est autorisé, un changement de l'état du premier équipement (4) peut être provoqué, et comprenant un accumulateur d'énergie (10) pour l'alimentation en énergie du deuxième équipement (5) en vue de son fonctionnement correct, dans lequel un transpondeur (17) fonctionnant de manière passive est prévu dans le deuxième équipement (5), le transpondeur (17) pouvant être amené à fonctionner sans alimentation en énergie par le deuxième équipement (5) de telle sorte que si l'accumulateur d'énergie (10) est épuisé, un fonctionnement de secours du deuxième équipement (5) est rendu possible en transmettant un signal supplémentaire codé (19) entre le premier équipement (4) et le deuxième équipement (5) pour l'authentification du deuxième équipement (5), dans lequel le transpondeur (17) est une étiquette SAW (onde acoustique de surface), dans lequel le signal d'interrogation (19a) émis par le premier équipement (4) est réfléchi par l'étiquette SAW (17) vers le premier équipement (4) sous forme de signal de réponse codé (19b) qui contient l'information pour l'authentification du deuxième équipement (5), et dans lequel l'étiquette SAW (17) peut fonctionner sans énergie, l'étiquette SAW (17) comprenant un substrat piézoélectrique (23),
**caractérisé en ce que** l'étiquette SAW (17) présente une antenne d'étiquette (24) pour recevoir le signal d'interrogation (19a), **en ce qu'**en outre l'antenne d'étiquette (24) est reliée à un transducteur interdigité (26) de l'étiquette SAW (17), qui convertit le signal électromagnétique de l'impulsion d'interrogation (19a) en une onde de surface acoustique (25), **en ce qu'**en outre encore l'étiquette SAW (17) présente au moins un réflecteur de code (27) pour l'onde de surface acoustique, disposé dans une position prédéterminée du substrat (23), **en ce qu'**en outre encore l'impulsion SAW (25a) acoustique, réfléchie au niveau du réflecteur de code (27), est reconverti au niveau du transducteur interdigité (26) en un signal électromagnétique et est envoyé par l'antenne d'étiquette (24) sous forme de signal de réponse (19b), et **en ce qu'**en outre encore le signal de réponse réfléchi (19b), codé de manière adéquate, est reçu par un lecteur (18) dans le premier équipement (4) pour déterminer l'authentification du deuxième équipement (5), et un élément de commutation (30) est connecté au réflecteur de code (27) de l'étiquette SAW (17), dans lequel le réflecteur de code (27) est activé ou désactivé selon l'état de commutation de l'élément de commutation (30), **en ce que**, si l'accumulateur d'énergie (10) n'est pas épuisé, le réflecteur de code (27) est désactivé par l'élément de commutation (30) de façon à empêcher la réflexion du signal de réponse (19b) codé, et **en ce qu'**en outre, si l'accumulateur d'énergie (10) est épuisé, le réflecteur de code (27) est activé par l'élément de commutation (30) de façon à permettre la réflexion du signal de réponse code (19b).

11. Dispositif, comprenant un élément de fermeture (32) verrouillable et/ou déverrouillable selon la revendication 10, **caractérisé en ce qu'**il s'agit d'un élément de fermeture (32) verrouillable et/ou déverrouillable d'une porte d'entrée d'un immeuble (31).

12. Procédé permettant de faire fonctionner un système de fermeture selon l'une quelconque des revendications 1 à 9, **caractérisé en ce qu'**en fonctionnement de secours, le premier équipement (4) émet un signal d'interrogation (19a) d'un signal supplémentaire (19) au deuxième équipement (5), **en ce que** le signal d'interrogation émis (19a) est reçu et codé par le transpondeur (17) dans le deuxième équipement (5), composé d'une étiquette SAW (onde acoustique de surface), **en ce que** le signal code est réfléchi comme signal de réponse (19b) du signal supplémentaire (19) par le transpondeur (17) dans le deuxième équipement (5), **en ce que** le signal de réponse (19b) réfléchi de manière codée est reçu par le premier équipement (4) et est évalué pour l'authentification du deuxième équipement (5), et **en ce qu'**après une authentification positive, le premier équipement (4) fonctionne correctement de sorte que le changement de l'état du premier équipement (4) est possible, et **en ce que** la réflexion du signal de réponse (19b) est désactivée si l'accumulateur d'énergie (10) n'est pas épuisé, et est activée si l'accumulateur d'énergie (10) est épuisé.

13. Procédé permettant de faire fonctionner un système de fermeture selon la revendication 12, **caractérisé en ce que** la réflexion du signal de réponse (19b) est activée automatiquement si l'accumulateur d'énergie (10) est épuisé.
